# EUROPÄISCHE PATENTSCHRIFT

(11) **EP 3 630 467 B1**
(45) Veröffentlichungstag und Bekanntmachung des Hinweises auf die Patenterteilung: **07.12.2022**
(21) Anmeldenummer: 18724454.6
(22) Anmeldetag: 03.05.2018
(51) Int. Cl.: B29C 70/52

(54) **VERFAHREN UND VORRICHTUNG ZUR HERSTELLUNG EINES KUNSTSTOFFPROFILS**
METHOD AND DEVICE FOR PRODUCING A PLASTIC PROFILE
PROCÉDÉ ET DISPOSITIF DE FABRICATION D'UN PROFILÉ EN MATIÈRE SYNTHÉTIQUE

(30) Priorität: 24.05.2017 DE 102017005296
(43) Veröffentlichungstag der Anmeldung: 08.04.2020
(73) Patentinhaber: Thomas Beteiligungs- und Vermögens-GmbH & Co. KG, 27432 Bremervörde (DE)
(72) Erfinder: JANSEN, Klaus, 21614 Buxtehude (DE)
(74) Vertreter: Hoener, Matthias
(86) Internationale Anmeldenummer: PCT/EP2018/000238
(87) Internationale Veröffentlichungsnummer: WO 2018/215087

(56) Entgegenhaltungen:
- WO-A1-2017/080638
- DE-A1-102008 013 467

## Beschreibung

Die Erfindung betrifft ein Verfahren zur Herstellung eines vorzugsweise gekrümmten Kunststoffprofils gemäß dem Oberbegriff des Anspruchs 1. Des Weiteren betrifft die Erfindung eine Vorrichtung zur Herstellung eines vorzugsweise gekrümmten Kunststoffprofils gemäß dem Oberbegriff des Anspruchs 9.

Bekanntermaßen werden insbesondere gerade Kunststoffprofile aus Kunststoff und einer durchgehenden Verstärkung aus Fasern, Gewebe oder dergleichen, die in den Kunststoff eingebettet werden, durchgehend als ein Strang hergestellt. Bei diesem Verfahren handelt es sich üblicherweise um ein Pultrusionsverfahren. Bei derartigen Pultrusionsverfahren wird der mindestens eine Faserstrang durch eine Form hindurchgeführt. Dieser Faserstrang wird entweder vor oder in der Form während des Hindurchführens mit dem flüssigem Kunststoff, der Matrix, versehen, der anschließend in der Form aushärtet. Das sodann die Form verlassende gehärtete Kunststoffprofil wird durch eine in Herstellungsrichtung vor der Form angeordnete Abzieheinrichtung bzw. Haltemittel durch die Form gezogen und dabei gleichzeitig abtransportiert. Dadurch, dass das Kunststoffprofil von dem Haltemittel durch die Form gezogen wird, lassen sich mit konventionellen Verfahren der beschriebenen Art, insbesondere mit bekannten Pultrusionsverfahren, nur gerade Kunststoffprofile herstellen.

Für die Herstellung gekrümmter Kunststoffprofile ist es bekannt, dass hierzu zusätzlich die Form bewegt werden muss. Dieses Verfahren ist unter der Bezeichnung Radius-Pultrusion bekannt und wird beispielsweise in DE 10 2008 013467 A1 beschrieben. Hierbei wird die Form periodisch erst relativ zum stillstehenden Kunststoffprofil bewegt und dieses dann in einer Gegenbewegung durch das geöffnete Haltemittel abtransportiert.

Nicht nur bei der Radius-Pultrusion, sondern auch bei der "Standard"-Pultrusion ist insbesondere der Start und das Stoppen des Verfahrens problematisch. Während im laufenden Herstellungsverfahren nur "biegesteife" Profile gezogen und abgelenkt werden müssen, befinden sich während des Anfahrens und des Stoppens des Verfahrens auch "biegeschlaffe" Fasern vor bzw. hinter dem Profil und müssen ebenfalls wirksam von dem Haltemittel zum Transport ergriffen werden, was bei bisherigen Verfahren problematisch ist.

Bei bekannten Pultrusionsvorrichtungen wird dies normalerweise so gelöst, dass die Fasern z. B. manuell verdrillt werden und ggf. zusätzlich mit Klebeband fixiert und die so entstehenden Stränge bzw. Bündel durch die Form bzw. Haltemittel bzw. Abzieheinrichtung gezogen werden. Die in den Haltemitteln bzw. in der Abzieheinrichtung liegenden Fasersegmente werden währenddessen manuell am Ende der Vorrichtung nachgespannt. Dieses Nachspannen der losen Fasern bzw. der Verstärkung wird solange durch manuelle Eingriffe fortgeführt, bis das ausgehärtete Profil von dem mindestens einem Haltemittel gehalten und durch die Form gezogen werden kann.

Dieses Vorgehen erfordert jedoch eine hohe Kompetenz und eine besondere Geschicklichkeit des Bedieners. Des Weiteren ist dieses Vorgehen mit erheblichen Sicherheitsrisiken verbunden, da permanent im Bereich der laufenden Vorrichtung gearbeitet werden muss, insbesondere in der Nähe der öffnenden und schließenden Haltemittel. Als besonders schwierig und riskant ist es anzusehen, wenn auf einer Vorrichtung mehrere Stränge parallel betrieben werden, die zum Beispiel sequenziell in Betrieb genommen werden.

Der Erfindung liegt daher die Aufgabe zugrunde, ein Verfahren und eine Vorrichtung zur einfachen und sicheren Herstellung, vorzugsweise gekrümmter, Kunststoffprofile zu schaffen.

Ein Verfahren zur Lösung dieser Aufgabe weist die Maßnahmen des Anspruchs 1 auf. Demnach ist es vorgesehen, dass mindestens ein Querschnitt eines Aufnahmeraums des mindestens einen Haltemittels entlang einer Längsachse des Haltemittels zum Ergreifen der Verstärkung und/oder des Kunststoffprofils verändert wird. Durch die Veränderung des mindestens einen Querschnitts des Aufnahmeraums des Haltemittels lässt sich sowohl die Verstärkung als auch das wenigstens teilweise fertiggestellte Kunststoffprofil von dem Haltemittel ergreifen und in Herstellungsrichtung auf eine einfache und sichere Art und Weise abtransportieren bzw. vorziehen. Ein zusätzliches Eingreifen einer Bedienperson ist durch dieses erfindungsgemäße Verfahren nicht mehr notwendig. Dadurch wird ein besonders sicheres und einfaches Verfahren zur Herstellung eines vorzugsweise gekrümmten Kunststoffprofils geschaffen. Es ist außerdem erfindungsgemäß vorgesehen, dass zum gleichzeitigen, festen Ergreifen sowohl der Verstärkung als auch eines Abschnittes des Kunststoffprofils, das aus der Verstärkung gebildet wurde und direkt an die Verstärkung anschließt, durch das mindestens eine Haltemittel, Querschnitte des Aufnahmeraumes an mehreren Positionen entlang der Längsachse des Haltemittels bereichsweise und der Form des Kunststoffprofils und der Verstärkung entsprechend geändert werden. So lassen sich insbesondere beim Anfahren und beim Stoppen des Fertigungsprozesses die Verstärkung, aus der gerade ein Kunststoffprofil geformt wird sowie ein Kunststoffprofil, bei dem die Harzzufuhr gestoppt wurde und somit in lose Verstärkung übergeht, abziehen. Insbesondere in den Situationen, in denen sich in dem Haltemittel sowohl ein Kunststoffprofil als auch lose Verstärkungen befinden, kann durch die bereichsweise Änderung der Querschnitte des Aufnahmeraums eine Verbindung hergestellt werden, die fest genug ist, um das Kunststoffprofil bzw. die Verstärkung durch die Form zu ziehen. Die Änderung der Querschnitte entlang der Längsachse des Haltemittels erfolgt vorzugsweise automatisch. D. h., dass die Querschnitte des Aufnahmeraums zunächst maximal groß sind, um sich sodann beim Ergreifen der Verstärkung bzw. des Kunststoffprofils "zusammenzuziehen", bis die Querschnitte über die gesamte Länge des Haltemittels gerade derart bemessen sind, dass sowohl zu der Verstärkung als auch zu dem Kunststoffprofil ein genügend großer Kraftschluss entstanden ist, um das Kunststoffprofil bzw. die Verstärkung durch die Form zu ziehen.

Insbesondere kann es erfindungsgemäß weiter vorgesehen sein, dass zum Ergreifen der Verstärkung und/oder des Kunststoffprofils Querschnitte des Aufnahmeraums entlang einer Längsachse des mindestens einen Haltemittels an mehreren Positionen verändert werden, wobei die zu ergreifende Verstärkung durch die Querschnittsänderungen des Aufnahmeraums aus einem geradlinigen Verlauf, vorzugsweise in eine mäanderartige Bahn, ausgelenkt wird. Bei den bisherigen Pultrusionsverfahren ist der Aufnahmeraum des Haltemittels so dimensioniert, dass dieser beim Ergreifen des Kunststoffprofils in seinem Querschnitt gerade dem Querschnitt des Kunststoffprofils entspricht, so dass dieses von dem Haltemittel fest ergriffen werden kann. Durch die Veränderlichkeit des Querschnitts des Aufnahmeraums gemäß der vorliegenden Erfindung, lassen sich nicht nur die fertigen Kunststoffprofile ergreifen und in Herstellungsrichtung ziehen, sondern auch die biegeschlaffe Verstärkung. Dazu werden die Querschnitte entlang der Längsachse des mindestens einen Haltemittels derart geändert, dass die biegeschlaffe Verstärkung aus Ihrem gespannten, geradlinigen Verlauf heraus in einen gekrümmten bzw. mäanderartigen Verlauf ausgelenkt bzw. hineingedrückt wird. Durch dieses Auslenken der Verstärkung wird die Reibung zwischen dem Haltemittel und der Verstärkung derart erhöht, dass durch die Haltemittel eine ausreichende Spannkraft auf die Verstärkung ausübbar ist, sodass die Verstärkung mittels des mindestens einen Haltemittels durch die Form gezogen werden kann. Dadurch wird der zuvor beschriebene Nachteil des manuellen, sehr aufwendigen Vorziehens der Verstärkung überwunden.

Ein weiteres Ausführungsbeispiel der vorliegenden Erfindung kann es vorsehen, dass zum Ergreifen des Kunststoffprofils und/oder der Verstärkung von dem mindestens einem Haltemittel die Querschnitte des Aufnahmeraums entlang der Längsachse des mindestens einen Haltemittels nacheinander, insbesondere sequenziell, geändert werden. Durch das Auslenken der Verstärkung aus einem zuvor geradlinigen Verlauf durch die Änderung des Querschnitts des mindestens einen Haltemittels verlängert sich der Abschnitt der Verstärkung im Haltemittel. Damit diese kurzfristige Verlängerung der Verstärkung nicht zu einer Beschädigung oder gar zu einem Reißen der Verstärkung führt, erfolgt die Querschnittsänderung des Aufnahmeraums entlang der Längsachse sequenziell, d. h. dass sich entlang der Längsachse die Querschnitte nacheinander ändern. Dadurch lässt sich kontrollieren, wie groß die mechanische Spannung auf die Verstärkung vor bzw. hinter dem Haltemittel ist und ggf. Gegenmaßnahmen ergreifen, wenn die mechanische Spannung zu groß wird. Für die Messung der mechanischen Spannung kann es vorgesehen sein, dass entsprechende Sensoren dem Haltemittel zugeordnet sind bzw. die Kraft, die auf das Haltemittel wirkt, gemessen wird. Für den Fall, dass zwei oder mehr Haltemittel für das erfindungsgemäße Verfahren verwendet werden, erfolgt auch dort die Querschnittsänderung nacheinander bzw. sequenziell.

Als ein weiteres vorteilhaftes Ausführungsbeispiel hat sich ergeben, dass Haltemittelbacken eines jeden Haltemittelteils des mindestens einen Haltemittels senkrecht zu einer Längsachse der Verstärkung und/oder des Kunststoffprofils, insbesondere unabhängig voneinander, bewegt werden. Jedes Haltemittel besteht aus mindestens zwei Haltemittelteilen oder Haltemittelhälften, die zum Ergreifen der Verstärkung bzw. des Kunststoffprofils zusammenbewegt werden bzw. zum Freigeben des Profils und/oder der Verstärkung auseinanderbewegt werden. Diesen Haltemittelteilen oder -hälften sind bewegliche Haltemittelbacken zugeordnet. Diese Haltemittelbacken lassen sich automatisch ansteuern oder alternativ auch manuell steuern. Durch das individuelle bzw. unabhängige Ansteuern und Bewegen dieser Haltemittelbacken läßt sich nahezu jede beliebige Verstärkung und/oder Kunststoffprofile genügend fest erfassen.

Bevorzugt kann es außerdem vorgesehen sein, dass erfindungsgemäß die Verstärkung von einem in eine Herstellungsrichtung betrachtet hinter dem mindestens einem Haltemittel angeordneten Abzieheinrichtung, insbesondere einer Abziehwalze oder einer Abziehwinde oder einem weiteren Haltemittel, zwischen der Form und der Abzieheinrichtung gespannt wird und während des Ergreifens der Verstärkung durch das mindestens eine Haltemittel, die Verstärkung wenigstens teilweise von der Abzieheinrichtung wieder freigegeben wird, vorzugsweise die Spannkraft verringert wird. Insbesondere während des Verfahrensschritts, in dem das Haltemittel die Verstärkung wenigstens kurzzeitig freigibt, um sich in Richtung der Form zu bewegen, wird die mechanische Spannung der Verstärkung durch die Abzieheinrichtung, an der die Verstärkung mit einem freien Ende befestigt ist, aufrechterhalten. Während des erneuten Erfassens bzw. Ergreifens der Verstärkung durch das Haltemittel wird unter einer vorbestimmten mechanischen Spannung ein Teil der bereits abgezogenen Verstärkung von der Abzieheinrichtung wieder freigegeben. Die Abzieheinrichtung dient lediglich dazu, die mechanische Spannung der Verstärkung aufrechtzuerhalten, kann jedoch auch dazu dienen, die Verstärkung durch die Form zu ziehen. Sobald die lose Verstärkung in das biegesteife Kunststoffprofil übergeht, wird die Verstärkung durch beispielsweise eine Säge, welche der Abzieheinrichtung zugeordnet sein kann, von dem Kunststoffprofil getrennt, sodass das fertige Kunststoffprofil in gewohnter Weise durch das Haltemittel abtransportiert bzw. in Herstellungsrichtung wegbewegt werden kann.

Insbesondere kann es weiter vorgesehen sein, dass die Verstärkung von der Abzieheinrichtung gespannt wird, während das mindestens eine Haltemittel außer Kontakt mit der Verstärkung tritt und entlang der Verstärkung bewegt wird, um die Verstärkung wieder zu ergreifen oder wenn die Verstärkung im Wechsel von mehreren Haltemitteln durch die Form gezogen wird, die Verstärkung von der Abzieheinrichtung gespannt wird.

Ein weiteres besonders bevorzugtes Ausführungsbeispiel der vorliegenden Erfindung kann es vorsehen, dass die Verstärkung durch Drehen der Abzieheinrichtung um die Längsachse des mindestens einen Haltemittels verdrillt wird. Durch das Verdrillen der Verstärkung erfährt diese zusätzlich eine Sicherung gegenüber ungewolltem Verrutschen während der Zugphase. Zum Verdrillen kann es vorgesehen sein, dass die Abzieheinrichtung die Verstärkung dreht bzw. dass die gesamte Abzieheinrichtung um die Längsachse der Verstärkung gedreht wird. Darüber hinaus kann es auch vorgesehen sein, dass in Herstellungsrichtung vor der Abzieheinrichtung eine Verdrilleinheit verwendet wird, um die Stränge der Verstärkung miteinander zu verdrillen.

Schließlich stellt es ein bevorzugtes Ausführungsbeispiel der vorliegenden Erfindung dar, dass die Form entlang des Verlaufs des Kunststoffprofils auf demselben bewegt wird, insbesondere das Kunststoffprofil während der Bewegung der Form festgehalten wird und die Form diskontinuierlich bzw. schrittweise hin- und herbewegt wird, wobei vorzugsweise nur während einer Rückwärtsbewegung der Form gegen die Herstellungsrichtung eine Relativbewegung der Form zum Kunststoffprofil stattfindet und das mindestens eine Haltemittel in Phasen, in denen die Form stillsteht, außer Kontakt mit dem Kunststoffprofil gebracht wird und relativ zum stillstehenden Kunststoffprofil in Richtung zur ebenfalls stillstehenden Form bewegt wird, vorzugsweise entgegen der Herstellungsrichtung zurückbewegt wird, und ggf. im Anschluss an die Zurückbewegung der Form mindestens ein sich außer Kontakt mit dem Kunststoffprofil befindliche Haltemittel in die Nähe des vorderen Endes der Form bewegt wird, vorzugsweise relativ zum dabei stillstehenden Kunststoffprofil.

Eine Vorrichtung zur Lösung der eingangs genannten Aufgabe weist die Merkmale des Anspruchs 9 auf. Demnach ist es vorgesehen, dass mindestens ein Querschnitt eines Aufnahmeraums des mindestens einen Haltemittels entlang einer Längsachse des Haltemittels zum Ergreifen der Verstärkung und/oder des Kunststoffprofils veränderbar ist. Durch das Verändern des Querschnitts des Aufnahmeraums lässt sich sowohl die Verstärkung als auch, vorzugsweise gleichzeitig, das Kunststoffprofil ergreifen, um es in Herstellungsrichtung zu transportieren bzw. durch die Form zu ziehen. Dies erweist sich insbesondere für das Abtransportieren der biegeschlaffen Verstärkung als besonders einfach und sicher für die Bedienperson, da diese nicht in den laufenden Betrieb der Vorrichtung eingreifen muss. Es ist außerdem erfindungsgemäß vorgesehen, dass zum gleichzeitigen, festen Ergreifen sowohl der Verstärkung als auch eines Abschnittes des Kunststoffprofils, das aus der Verstärkung gebildet wurde und direkt an die Verstärkung anschließt, durch das mindestens eine Haltemittel, Querschnitte des Aufnahmeraumes an mehreren Positionen entlang der Längsachse des Haltemittels bereichsweise und der Form des Kunststoffprofils und der Verstärkung entsprechend veränderbar sind. So lassen sich insbesondere beim Anfahren und beim Stoppen des Fertigungsprozesses die Verstärkung, aus der gerade ein Kunststoffprofil geformt wird sowie ein Kunststoffprofil, bei dem die Harzzufuhr gestoppt wurde und somit in lose Verstärkung übergeht, abziehen. Insbesondere in den Situationen, in denen sich in dem Haltemittel sowohl ein Kunststoffprofil als auch lose Verstärkungen befinden, kann durch die bereichsweise Änderung der Querschnitte des Aufnahmeraums eine Verbindung hergestellt werden, die fest genug ist, um das Kunststoffprofil bzw. die Verstärkung durch die Form zu ziehen. Die Änderung der Querschnitte entlang der Längsachse des Haltemittels erfolgt vorzugsweise automatisch. D. h., dass die Querschnitte des Aufnahmeraums zunächst maximal groß sind, um sich sodann beim Ergreifen der Verstärkung bzw. des Kunststoffprofils "zusammenzuziehen", bis die Querschnitte über die gesamte Länge des Haltemittels gerade derart bemessen sind, dass sowohl zu der Verstärkung als auch zu dem Kunststoffprofil ein genügend großer Kraftschluss entstanden ist, um das Kunststoffprofil bzw. die Verstärkung durch die Form zu ziehen.

Insbesondere kann es vorgesehen sein, dass das Haltemittel aus mindestens zwei, vorzugsweise vier, relativ zueinander beweglichen, insbesondere senkrecht zur Herstellungsrichtung des Kunststoffprofils, Haltemittel aufgebaut ist, und jedes Haltemittelteil jeweils mindestens eine Haltemittelbacke, vorzugsweise eine Vielzahl von Haltemittelbacken, aufweist, wobei die Haltemittelbacken senkrecht zur Herstellungsrichtung des Kunststoffprofils beweglich sind. Die Haltemittelteile des Haltemittels bzw. die Haltemittelhälften lassen sich derart zusammenfügen, dass sich zwischen Ihnen der Aufnahmeraum zur Aufnahme der Verstärkung bzw. des Kunststoffprofils bildet. Durch Auseinanderfahren dieser Haltemittelteile wird der Aufnahmeraum für die Aufnahme der Verstärkung bzw. des Kunststoffprofils freigegeben. An einer Innenwandung dieses Aufnahmeraums sind die Haltemittelbacken derart beweglich gelagert, dass sie sich senkrecht zur Längsachse der Verstärkung bzw. des Kunststoffprofils bewegen lassen, um selbige fest zu ergreifen. Für den Fall, dass das Haltemittel aus vier Haltemittelteilen zusammengesetzt wird, können Haltemittelbacken aus vier unterschiedlichen Richtungen, nämlich von vier verschiedenen Haltemittelteilen, auf die Verstärkung bzw. auf das Kunststoffprofil einwirken und dieses entsprechend fixieren.

Außerdem kann es weiter bevorzugt vorgesehen sein, dass die Haltemittelbacken einzeln und unabhängig voneinander, insbesondere automatisch, bewegbar sind und wenigstens einige Haltemittelbacken unterschiedlicher Haltemittelteile gegenüberliegend angeordnet sind und komplementär zueinander in Richtung der Längsachse bewegbar sind und zwar vorzugsweise derart, dass mindestens eine Haltemittelbacke über die Längsachse in Richtung des gegenüberliegenden Haltemittelteils hinausbewegbar ist. Beispielsweise lassen sich alle Haltemittelbacken einzeln durch Aktuatoren ansteuern und in ihrer relativen Lage zueinander verändern. Gleichermaßen ist es denkbar, dass es sich bei den Haltemittelbacken um aufblasbare Kissen oder Säcke handelt oder um mit einer Flüssigkeit oder einem Gas beaufschlagbare Zylinder. Beim Zusammenfahren der Haltemittelteile werden die Haltemittelbacken, vorzugsweise automatisch, derart in Richtung der Längsachse des Kunststoffprofils, oder auch darüber hinaus, bewegt, bis eine vorzugebende Gegenkraft erzielt worden ist oder eine vorzugebende Position erreicht ist.

Darüber hinaus ist es auch denkbar, dass in Herstellungsrichtung des Kunststoffprofils betrachtet, hinter dem mindestens einem Haltemittel eine Abzieheinrichtung, insbesondere eine Abziehwalze oder eine Abziehwinde oder ein weiteres Haltemittel, positioniert ist, mit der die Verstärkung ergreifbar und spannbar ist, wobei die Verstärkung vorzugsweise während des Herstellungsprozesses von der Abzieheinrichtung wenigstens zeitweise wieder freigebbar ist, insbesondere die mechanische Spannung der Verstärkung durch die Abzieheinrichtung variierbar ist. Die Abzieheinrichtung weist insbesondere einen Greifer auf, mit dem ein loses Ende der Verstärkung ergreifbar ist, um dieses in Herstellungsrichtung zu ziehen bzw. eine mechanische Spannung aufzubauen. Für das Zusammenfahren der Haltemittelteile kann die Verstärkung wenigstens teilweise von der Abzieheinrichtung wieder freigegeben werden, um ein Reißen der Verstärkung zu vermeiden.

Weiter kann es vorgesehen sein, dass die Abzieheinrichtung um die Verstärkung herum drehbar gelagert ist, sodass die einzelnen Stränge der Verstärkung miteinander verdrillbar sind oder dass hinter der Abzieheinrichtung eine Verdrilleinheit angeordnet ist, die die einzelnen Stränge der Verstärkung miteinander verdrillt. Durch dieses Verdrillen erfährt die Verstärkung eine weitere Sicherung gegenüber Verrutschen der einzelnen Stränge zueinander.

Nachfolgend wird ein bevorzugtes Ausführungsbeispiel der vorliegenden Erfindung anhand der Zeichnung näher erläutert. In dieser zeigen:
- Fig. 1: eine schematische Ansicht einer erfindungsgemäßen Vorrichtung in einer Ausgangsstellung,
- Fig. 2: eine schematische Ansicht der Vorrichtung in einer zweiten Phase des erfindungsgemäßen Verfahrens,
- Fig. 3: eine schematische Ansicht der Vorrichtung gemäß Fig. 1 in einer dritten Phase,
- Fig. 4: eine schematische Ansicht der Vorrichtung gemäß Fig. 1 in einer vierten Phase,
- Fig. 5: eine schematische Ansicht der Vorrichtung gemäß Fig. 1 in einer fünften Phase,
- Fig. 6: eine schematische Darstellung eines Haltemittels in einer Ausgangsstellung,
- Fig. 7: das Haltemittel gemäß Fig. 6 in einer zweiten Stellung,
- Fig. 8: das Haltemittel gemäß Fig. 6 in einer dritten Stellung,
- Fig. 9: das Haltemittel gemäß Fig. 6 in einer vierten Stellung,
- Fig. 10: das Haltemittel gemäß Fig. 6 in einer fünften Stellung,
- Fig. 11: schematische Darstellung einer Seitenansicht einer Abzieheinrichtung, und
- Fig. 12: eine schematische Ansicht der Abzieheinrichtung gemäß Fig. 11 in Herstellungsrichtung betrachtet.

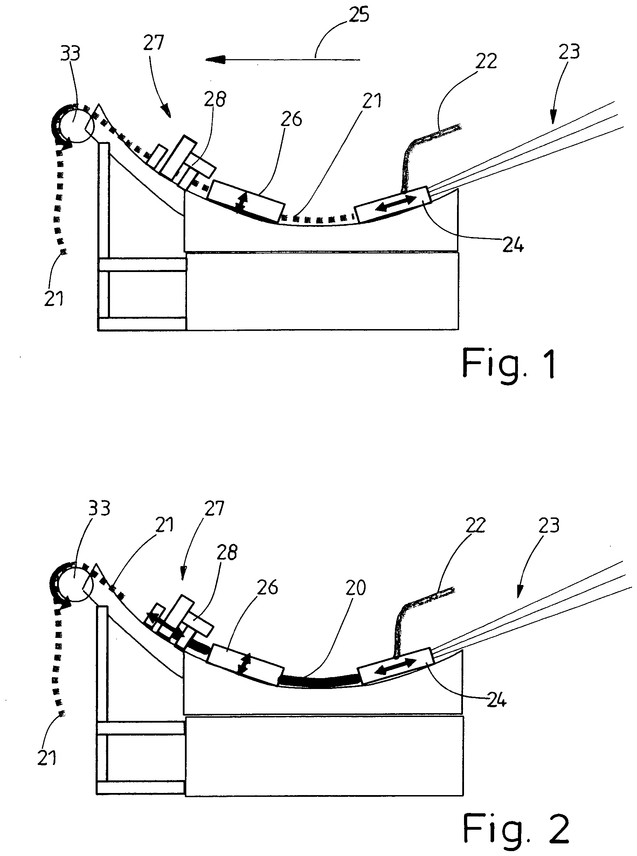

Die Fig. 1 bis 5 zeigen stark schematisiert eine erfindungsgemäße Vorrichtung, die auch zur Durchführung des erfindungsgemäßen Verfahrens dient. Bei dieser Vorrichtung handelt es sich um eine Pultrusionsvorrichtung für ein Kunststoffprofil 20 mit einer innenliegenden Verstärkung 21, aus Strängen 23, Geweben und/oder dergleichen und einem diese umgebenden, als Matrix wirkenden, Kunststoff 22, bei dem es sich vorzugsweise um einen Duroplasten handeln kann. Im nur schematisch gezeigten Ausführungsbeispiel wird davon ausgegangen, dass die Verstärkung 21 aus einer Vielzahl endloser Stränge 23 aus vorzugsweise hochzugfesten Fasern, beispielsweise Kohlefasern, besteht. In dem Kunststoff 22 können aber auch beliebig andere Verstärkungen eingebettet werden, wie beispielsweise Gewebe und/oder Gewirke bzw. Kombinationen der Stränge 23 mit Geweben und/oder Gewirken.

Mit der schematisch gezeigten Vorrichtung und dem erfindungsgemäßen Verfahren lassen sich durch Pultrusion Kunststoffprofile 20 mit einem beliebigen Verlauf herstellen. In den Figuren ist exemplarisch ein gebogenes Kunststoffprofil 20 gezeigt, dass einen bogenförmigen Verlauf erhält. Es ist aber auch denkbar, mit der erfindungsgemäßen Vorrichtung und dem erfindungsgemäßen Verfahren Kunststoffprofile 20 herzustellen, die über einen räumlichen (dreidimensionalen) Verlauf verfügen.

Die in den Fig. 1 bis 5 gezeigte Vorrichtung weist eine Form 24 auf, die dem bogenförmigen Verlauf des herzustellenden Kunststoffprofils 20 entspricht. Eine Längsmittelachse der Form 24 ist dementsprechend genauso gebogen, wie das herzustellende Kunststoffprofil 20, wodurch der Radius des Kunststoffprofils 20 und der Längsmittelachse der Form 24 identisch sind.

Die Verstärkung 21 bzw. die Stränge 23 sind in Herstellungsrichtung 25 betrachtet vor der Vorrichtung einer nicht dargestellten Abspuleinrichtung zugeordnet, die einen Vorrat der Verstärkung 21 aufnimmt. Die Abspuleinrichtung weist mehrere Spulen auf, auf denen die Stränge aufgewickelt sind. Die Spulen können antreibbar und/oder abbremsbar sein, sodass die Stränge 23 stets vorgespannt sind.

Wie bei den bekannten Radiuspultrusionsverfahren wird die Form 24 zur Herstellung des Kunststoffprofils auf selbigen in bzw. entgegen der Herstellungsrichtung 25 hin- und herbewegt. Bei der Bewegung der Form 24 entgegen der Herstellungsrichtung 25 werden die einzelnen Stränge 23 der Verstärkung 21 in die Form eingezogen und dort mit der Matrix bzw. dem Kunststoff 22, welcher über eine Zuleitung in die Form 24 geleitet wird, eingebettet (Fig. 1). Während dieser Rückbewegung der Form 24 wird das bereits fertiggestellte Kunststoffprofil 20 in Herstellungsrichtung 25 betrachtet vor der Form 24 durch mindestens ein Haltemittel 26 festgehalten. Sobald die Form 24 auf dem Kunststoffprofil 20 ganz zurückbewegt wurde, tritt das Haltemittel 26 außer Kontakt mit dem Kunststoffprofil 20 und die Form 24 mitsamt dem bereits fertiggestellten Kunststoffprofil 20 werden in Herstellungsrichtung 25 vor bewegt, wobei sich das fertiggestellte Kunststoffprofil 20 durch das geöffnete Haltemittel 26 bewegt. Sobald die Form 24 in die Nähe des Haltemittels 26 bzw. in Kontakt mit dem Haltemittel 26 tritt, wird das Kunststoffprofil 20 wieder vom Haltemittel 26 ergriffen und die Form 24 bewegt sich erneut entgegen der Herstellungsrichtung 25 über die Stränge 23 der Verstärkung 21.

In Herstellungsrichtung 25 betrachtet kann sich vor dem Haltemittel 26 eine weitere Haltemitteleinrichtung 27, die auch als Abzieheinrichtung bezeichnet werden bzw. dienen kann, befinden, die zum Abtransport des Kunststoffprofils 20 selbiges ergreift. Des Weiteren ist der Haltemitteleinrichtung 27 bzw. der Abzieheinrichtung eine Säge 28 zugeordnet, mit welcher sowohl das fertige Kunststoffprofil 20 in Abschnitte zersägt als auch die Verstärkung 21 zerschnitten werden kann.

Für die Herstellung eines geradlinigen Kunststoffprofils 20 kann es auch vorgesehen sein, dass die Form 24 stillsteht und die Haltemittel 26, 27 sich periodisch im Wechsel auf dem Kunststoffprofil 20 in und entgegen der Herstellungsrichtung 25 bewegen und die Verstärkung 21 bzw. das Kunststoffprofil 20 durch die Form 24 ziehen.

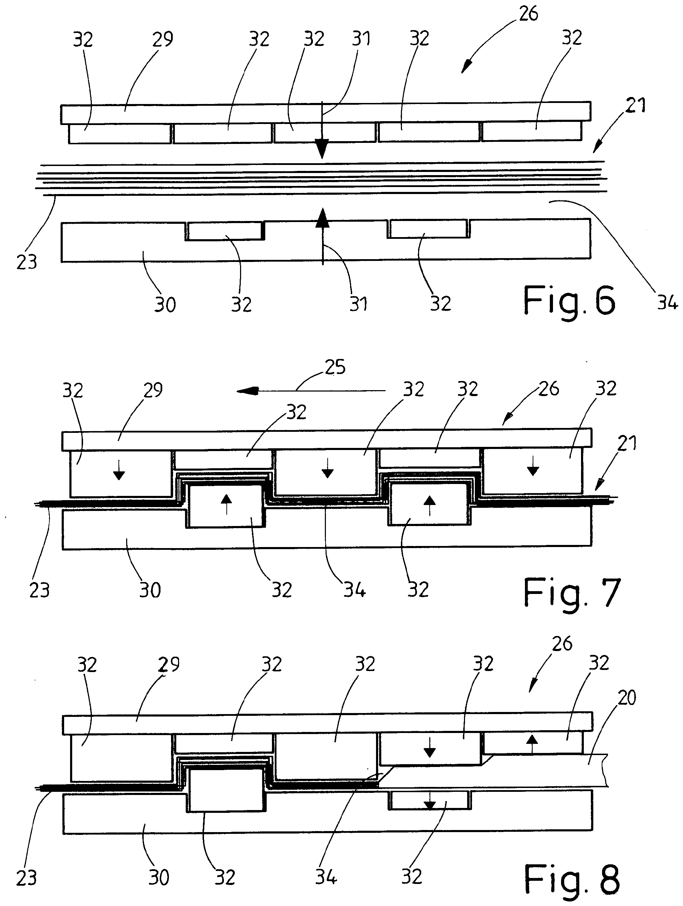

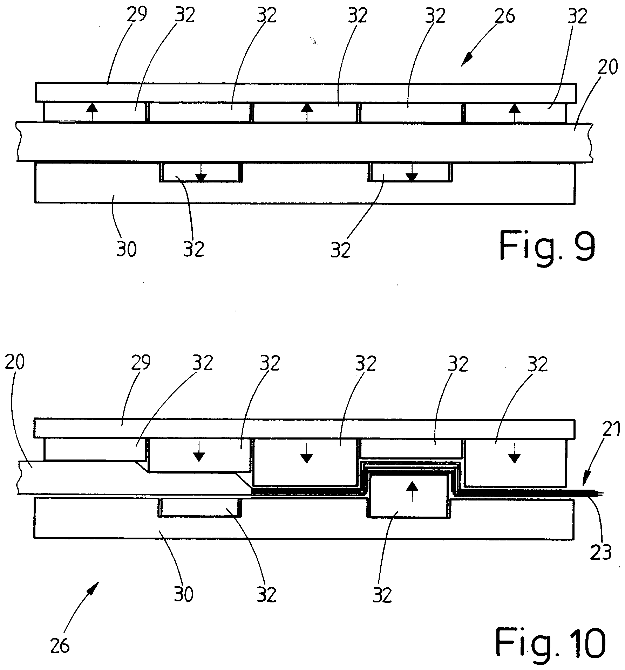

Zum Ergreifen des Kunststoffprofils 20 durch das Haltemittel 26 ist dieses aus mehreren beweglichen Haltemittelteilen 29, 30 zusammengesetzt. In der Fig. 6 ist stark schematisiert ein Haltemittel 26 dargestellt, welches zwei Haltemittelteile 29, 30 aufweist. Zum Ergreifen des Kunststoffprofils 20 werden diese beiden Haltemittelteile 29, 30 in Pfeilrichtung 31, d. h. senkrecht zur Herstellungsrichtung 25 und zur Längsachse des Kunststoffprofils zusammenbewegt (Fig. 6, Fig. 9). Der durch die beiden Haltemittelteile 29, 30 eingeschlossene Raum wird als Aufnahmeraum 34 bezeichnet und dient der Aufnahme des Kunststoffprofils 20 und der Verstärkung 21. Die Innenwände des Aufnahmeraums 34 werden zum Abtransport des Kunststoffprofils 20 und der Verstärkung 21 auf selbige gedrückt, um eine genügend große Reibung zu erzeugen. Es ist auch denkbar, dass das Haltemittel 26 mehrere Haltemittelteile 29, 30 aufweist, die um das Kunststoffprofil 20 herum anordbar sind.

Jedes Haltemittelteil 29, 30 weist mehrere Haltemittelbacken 32 auf, die sich in den Aufnahmeraum 34 erstrecken. Diese Haltemittelbacken 32 sind derart ausgebildet, dass sie in Pfeilrichtung 31, d. h. quer zur Herstellungsrichtung 25, vor und zurück bewegbar sind, so dass sich der Querschnitt des Aufnahmeraums 34 entlang der Längsachse des Haltemittels 26 ändert. Je nachdem, ob die Haltemittelbacken 32 gleichermaßen oder unterschiedlich verfahren werden, weist der Aufnahmeraum 34 einen oder eine Vielzahl unterschiedlicher Querschnitte auf.

Die Haltemittelbacken 32 können als Blöcke ausgebildet sein, welche durch einen Aktuator in Pfeilrichtung 31 verfahrbar sind. Gleichermaßen ist es denkbar, dass es sich bei den Haltemittelbacken 32 um Säcke bzw. Kissen handelt, welche mit einem Gas oder einer Flüssigkeit unter Druck beaufschlagbar sind, um ihr Volumen in Pfeilrichtung 31 zu verändern.

Zu Beginn des Herstellungsverfahrens muss zunächst die Verstärkung 21, d. h. die einzelnen Stränge 23, durch die Form 24 sowie durch das mindestens eine Haltemittel 26 geführt werden und an der Abzieheinrichtung 33 befestigt werden. Damit die Verstärkung 21 durch die Form 24 gezogen werden kann, muss eine genügend große Zugkraft aufgebracht werden. Insbesondere wenn die Verstärkung 21 wenigstens teilweise mit dem Kunststoff 22 umhüllt ist, kann die notwendig werdende Zugkraft sehr groß sein. Die Abzieheinrichtung 33 kann diese Zugkraft nicht aufwenden. Daher wird erfindungsgemäß insbesondere für den Startprozess des Verfahrens die Verstärkung 21 von dem mindestens einem Haltemittel 26 durch die Form 24 gezogen. Damit das Haltemittel 26 eine genügend große Zugkraft auf die Verstärkung 21 bzw. auf die einzelnen Stränge 23 ausüben kann, werden zum Ergreifen der Verstärkung 21 die Haltemittelteile 29, 30 in Pfeilrichtung 31 zusammenbewegt und zusätzlich die Haltemittelbacken 32 in Pfeilrichtung 31 aufeinander zubewegt, sodass sich für den Aufnahmeraum 34 verschiedene Querschnitte bilden und die einzelnen Stränge 23 der Verstärkung 21 von den einzelnen Haltemittelbacken 32 in eine mäanderartige Bahn gedrückt werden (Fig. 7). Durch dieses Ergreifen oder Einklemmen der einzelnen Stränge 23 kann ein genügend großer Reibschluss bzw. Kraftschluss zwischen dem Haltemittel 26 und der Verstärkung 21 erzielt werden, um die Verstärkung 21 durch die Form 24 zu ziehen.

Wie oben bereits anhand der Fig. 1 beschrieben, wird zu Beginn des Herstellungsverfahrens zunächst die Verstärkung 21 durch die Form 24 und das Haltemittel 26 gezogen. Dazu wird die Verstärkung 21 von dem Haltemittel 26 bzw. von den Haltemittelbacken 32 ergriffen und die Form 24 bewegt sich entgegen der Herstellungsrichtung 25 über die Verstärkung 21. Sobald die äußere Auslenkung der Form 24 erreicht wurde, bewegen sich die Haltemittelbacken 32 entgegen der Pfeilrichtung 31 zurück und geben die einzelnen Stränge 23 der Verstärkung 21 frei. Die Form 24 wird sodann in Herstellungsrichtung 25 zurückbewegt. Damit bei diesem Vorbewegen der Form 24 die Verstärkung 21 bzw. die Stränge 23 gespannt bleiben, werden diese zusätzlich durch die Abzieheinrichtung 33 abgezogen, sodass sie zwischen der Abzieheinrichtung 33 und der Form 24 gespannt sind (Fig. 1). Sobald die Form 24 Ihre Ausgangsstellung erreicht hat, wird die Verstärkung 21 wieder von dem Haltemittel 26 bzw. den Haltemittelbacken 32 ergriffen.

Da durch dieses Ergreifen der Verstärkung 21 von den Haltemittelbacken 32 die Länge der Verstärkung 21, die zwischen den Haltemittelbacken 32 eingeklemmt wird, vergrößert wird, gibt die Abzieheinrichtung 33 wieder einen gewissen Anteil an der Verstärkung 21 frei, sodass selbige nicht reißt. Das Ergreifen der Verstärkung 21 durch die Haltemittelbacken 32 erfolgt sequenziell, d. h. dass die einzelnen Haltemittelbacken 32 nacheinander und vorzugsweise in Herstellungsrichtung 25 in Richtung der Verstärkung 21 bewegt werden, sodass es zu keinen Stauungen der einzelnen Stränge 23 in dem Haltemittel 26 kommt.

Sobald ein wenigstens teilweise ausgebildetes Kunststoffprofil 20 in der Form 24 ausgebildet wird und durch das zuvor beschriebene Verfahren in das Haltemittel 26 gelangt, werden die Querschnitte des Aufnahmeraums 34 entsprechend geändert, indem die Haltemittelbacken 32 gerade soweit zusammenbewegt werden, dass sie das wenigstens teilweise ausgebildete Kunststoffprofil 20 fest ergreifen können (Fig. 2, Fig. 8). Das Zusammenfahren der Haltemittelbacken 32 erfolgt dabei automatisch. Die Haltemittelbacken 32 bewegen sich auf die Verstärkung 21 bzw. das Kunststoffprofil 20 zu, bis ein bestimmter mechanischer Widerstand bzw. Gegendruck erreicht wird.

In den folgenden Herstellungszyklen wird sodann das Kunststoffprofil 20 vollständig ausgebildet und von dem Haltemittel 26 in bekannter Art und Weise durch die Form 24 gezogen (Fig. 2). In dieser Phase sind alle Haltemittelbacken 32 vollständig zurückgezogen, sodass der Aufnahmeraum 34 seinen größten Querschnitt erreicht (Fig. 9). Die Haltemittelteile 29, 30 ergreifen nun in bekannter Weise das Kunststoffprofil 20. In dieser Phase wird das Kunststoffprofil 20 auf bekannte Weise in einer bestimmten Menge hergestellt. Der vordere Teil des Kunststoffprofils 20, der während der Startphase ausgebildet wurde, wird von der Säge 28 abgelenkt. Die Verstärkung 21, die zunächst durch die Form 24 und das Haltemittel 26 geführt wurde, wird durch die Abzieheinrichtung 33 abgeführt (Fig. 2).

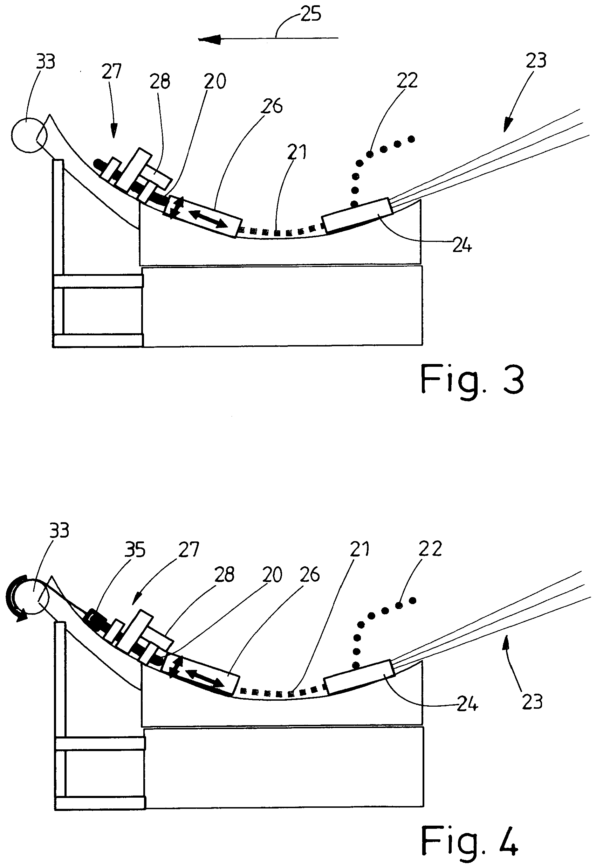

Wenn die Herstellung des Kunststoffprofils 20 gestoppt werden soll, wird zunächst die Zufuhr des Kunststoffes 20 in die Form 24 unterbrochen. Dadurch wird in der Form 24 das Kunststoffprofil 20 nur noch teilweise ausgebildet und in das Haltemittel 26 werden neben dem Kunststoffprofil 20 wieder die losen Stränge 23 der Verstärkung 21 eingezogen (Fig. 10). Dadurch, dass das Kunststoffprofil 20 den Aufnahmeraum 34 des Haltemittels 26 nicht mehr ganz ausfüllt, bewegen sich die Haltemittelbacken 32 wieder weiter in den Aufnahmeraum 34 hinein, sodass erneut eine kraftschlüssige Verbindung mit der Verstärkung 21 bzw. den einzelnen Strängen 23 eingegangen wird. Das verbleibende Kunststoffprofil 20 wird nun durch Zusammenspiel des Haltemittels 26 und der Haltemitteleinrichtung 27 bzw. der Abzieheinrichtung 33 in Herstellungsrichtung 25 abtransportiert (Fig. 3). Dazu wird das Kunststoffprofil 20 an einer Stelle abgesägt, sodass das lose Ende des Kunststoffprofils 20 von einem zusätzlichen Greifer 35 der mit der Abzieheinrichtung 33 verbunden ist, in Herstellungsrichtung 25 abgezogen werden kann (Fig. 4).

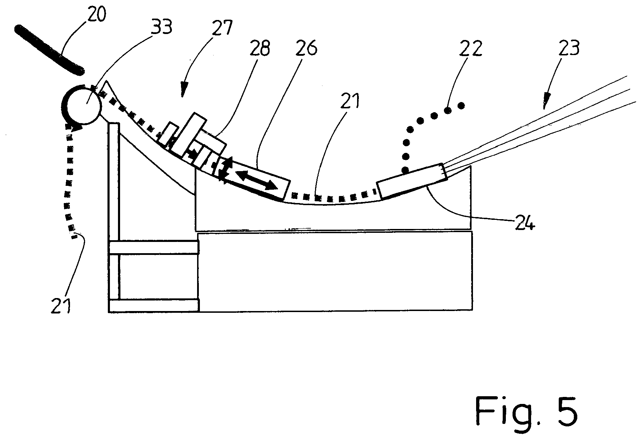

Sobald das nur noch teilweise ausgebildete Kunststoffprofil 20 von der Abzieheinrichtung 33 abgefördert wurde, erfolgt erneut eine Trennung der Reste des Kunststoffprofils 20 von den Strängen 23 der Verstärkung 21 durch die Säge 28. Die losen Stränge 23 der Verstärkung 21 werden sodann erneut von der Abzieheinrichtung 33 auf Spannung gebracht und die Vorrichtung ist bereit um ein weiteres Kunststoffprofil 20 durch das Pultrusionsverfahren herzustellen (Fig. 5).

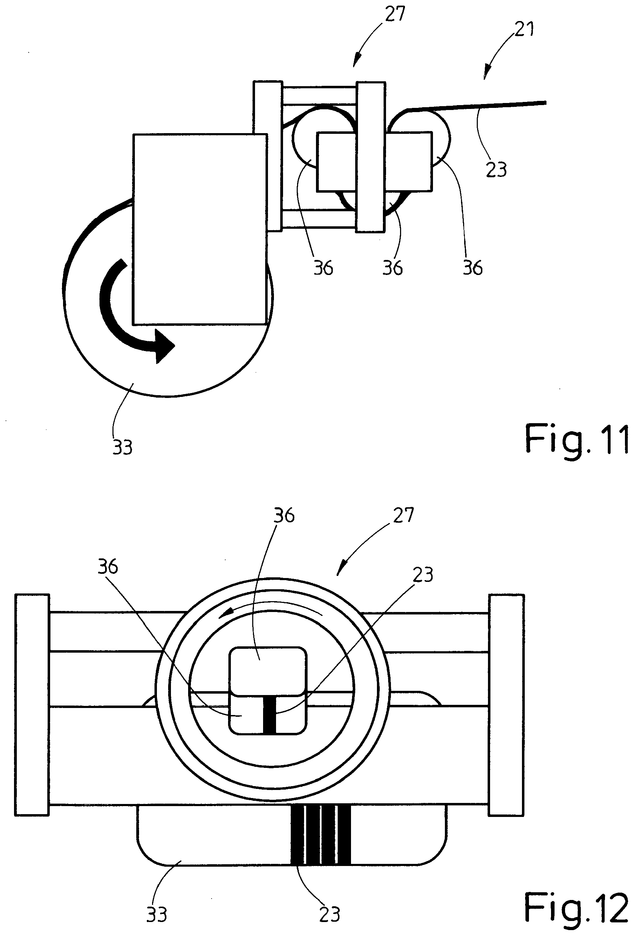

Um die einzelnen Stränge 23 der Verstärkung 21 während der Startphase, d. h. während des Ziehens der Verstärkung 21 durch die Form 24 bzw. das Haltemittel 26 zusätzlich vor Verrutschen zu sichern, können die einzelnen Stränge 23 zusätzlich verdrillt werden. Dazu ist es erfindungsgemäß vorgesehen, dass beispielsweise die Haltemitteleinrichtung 27 oder eine Abzieheinrichtung drehbar gelagert ist. Das in den Fig. 11 und 12 dargestellte Ausführungsbeispiel der Haltemitteleinrichtung 27 und der Abzieheinrichtung 33 stellt nur deren Funktion dar und ist nur in diesem Sinne auf die Fig. 1 bis 5 zu übertragen. Die Verstärkung 21 bzw. die einzelnen Stränge 23 werden durch die Haltemitteleinrichtung 27 geführt und sodann von der Abzieheinrichtung 33 aufgenommen, welche die Stränge 23 durch die Haltemitteleinrichtung 27 zieht. Die hier dargestellte Haltemitteleinrichtung 27 weist drei Rollen 36 auf, durch welche die Stränge 23 geführt werden. Dabei kann die Haltemitteleinrichtung 27 als Kalander ausgebildet sein. Zum Verdrillen der einzelnen Stränge 23 wird nun dir Haltemitteleinrichtung 27 mitsamt der Rollen 36 gedreht (Fig. 2). Die von der Abzieheinrichtung 33 sodann abgezogene Verstärkung 21 weist dann verdrillte Stränge 23 auf.

### Bezugszeichenliste

- 20: Kunststoffprofil
- 21: Verstärkung
- 22: Kunststoff
- 23: Strang
- 24: Form
- 25: Herstellungsrichtung
- 26: Haltemittel
- 27: Haltemitteleinrichtung
- 28: Säge
- 29: Haltemittelteil
- 30: Haltemittelteil
- 31: Pfeilrichtung
- 32: Haltemittelbacke
- 33: Abzieheinrichtung
- 34: Aufnahmeraum
- 35: Greifer
- 36: Roller

## Patentansprüche

1. Verfahren zur Herstellung eines vorzugsweise gekrümmten Kunststoffprofils (20), wobei eine durchgehende Verstärkung (21) aus Strängen (23), Geweben und/oder dergleichen von mindestens einem Haltemittel (26) durch eine Form (24) gezogen, wozu die Verstärkung (21) und/oder das Kunststoffprofil (20) wenigstens zeitweise von dem mindestens einem Haltemittel (26) ergriffen wird, und die Verstärkung (21) in der Form (24) in eine Matrix eingebettet wird und wobei die Form (24) und das mindestens eine Haltemittel (26) auf dem Kunststoffprofil (20) periodisch relativ zueinander bewegt werden, wobei mindestens ein Querschnitt eines Aufnahmeraums (34) des mindestens einen Haltemittels (26) entlang einer Längsachse des Haltemittels (26) zum Ergreifen der Verstärkung (21) und/oder des Kunststoffprofils (20) verändert wird **dadurch gekennzeichnet, dass** zum gleichzeitigen, festen Ergreifen sowohl der Verstärkung (21) als auch eines Abschnittes des Kunststoffprofils (20), das aus der Verstärkung (21) gebildet wurde und direkt an die Verstärkung (21) anschließt, durch das mindestens eine Haltemittel (26), Querschnitte des Aufnahmeraums (34) an mehreren Positionen entlang der Längsachse des Haltemittels (26) bereichsweise und der Form (24) des Kunststoffprofils (20) und der Verstärkung (21) entsprechend, geändert werden.

2. Verfahren nach Anspruch 1, **dadurch gekennzeichnet, dass** zum Ergreifen der Verstärkung (21) und/oder des Kunststoffprofils (20) Querschnitte des Aufnahmeraums (34) entlang einer Längsachse des mindestens einen Haltemittels (26) an mehreren Positionen verändert werden, wobei die zu ergreifende Verstärkung (21) durch die Querschnittsänderungen des Aufnahmeraums (34) aus einem geradlinigen Verlauf, vorzugsweise in einen mäanderartigen Verlauf, ausgelenkt wird.

3. Verfahren nach einem der Ansprüche 1 oder 2, **dadurch gekennzeichnet, dass** zum Ergreifen des Kunststoffprofils (20) und/oder der Verstärkung (21) von dem mindestens einem Haltemittel (26) die Querschnitte des Aufnahmeraums (34) entlang der Längsachse des mindestens einen Haltemittels (26) nacheinander, insbesondere sequentiell, geändert werden.

4. Verfahren nach einem der vorherigen Ansprüche, **dadurch gekennzeichnet, dass** Haltebacken (32) eines jeden Haltemittelteils (29) des mindestens einen Haltemittels (29) senkrecht zu einer Längsachse der Verstärkung (21) und/oder des Kunststoffprofils (20), insbesondere unabhängig voneinander, bewegt werden.

5. Verfahren nach einem der vorherigen Ansprüche, **dadurch gekennzeichnet, dass** die Verstärkung (21) von einer in eine Herstellungsrichtung (25) betrachtet vor dem mindestens einem Haltemittel (26) angeordneten Abzieheinrichtung (33), insbesondere einer Abziehwalze oder einer Abziehwinde oder einem weiteren Haltemittel (26), zwischen der Form (24) und der Abzieheinrichtung (33) gespannt wird und während des Ergreifens der Verstärkung (21) durch das mindestens ein Haltemittel (26), die Verstärkung (21) wenigstens teilweise von der Abzieheinrichtung (33) wieder freigegeben wird, vorzugsweise die Spannkraft verringert wird.

6. Verfahren nach Anspruch 5, **dadurch gekennzeichnet, dass** die Verstärkung (21) von der Abzieheinrichtung (33) gespannt wird, während das mindestens eine Haltemittel (26) außer Kontakt mit der Verstärkung (21) tritt und entlang der Verstärkung (21) bewegt wird, um die Verstärkung (21) wieder zu ergreifen oder wenn die Verstärkung (21) im Wechsel von mehreren Haltemitteln (26) durch die Form (24) gezogen wird, die Verstärkung (21) von der Abzieheinrichtung (33) gespannt wird.

7. Verfahren nach Anspruch 5 oder 6, **dadurch gekennzeichnet, dass** die Verstärkung (21) durch Drehen der Abzieheinrichtung (33) um die Längsachse des mindestens einen Haltemittels (26) verdrillt wird.

8. Verfahren nach einem der vorherigen Ansprüche, **dadurch gekennzeichnet, dass** die Form (24) entlang des Verlaufs des Kunststoffprofils (20) auf demselben bewegt wird, insbesondere das Kunststoffprofil (20) während der Bewegung der Form (24) festgehalten wird und die Form (24) diskontinuierlich bzw. schrittweise hin- und herbewegt wird, wobei vorzugsweise nur während einer Rückwärtsbewegung der Form (24) gegen die Herstellungsrichtung (25) eine Relativbewegung der Form (24) zum Kunststoffprofil (20) stattfindet und das mindestens eine Haltemittel (26) in Phasen, in denen die Form (24) stillsteht, außer Kontakt mit dem Kunststoffprofil (20) gebracht wird und relativ zum stillstehenden Kunststoffprofil (20) in Richtung zur ebenfalls stillstehenden Form (24) bewegt wird, vorzugsweise entgegen der Herstellungsrichtung (25) zurückbewegt wird, und gegebenenfalls im Anschluss an die Zurückbewegung der Form (24) mindestens ein sich außer Kontakt mit dem Kunststoffprofil (20) befindliche Haltemittel (26) in die Nähe des vorderen Endes der Form (24) bewegt wird, vorzugsweise relativ zum dabei stillstehenden Kunststoffprofil (20).

9. Vorrichtung zur Herstellung eines vorzugsweise gekrümmten Kunststoffprofils (20) mit einer Form (24), in der eine durchgehende Verstärkung (21) in eine Matrix einbettbar ist, und mindestens einem Haltemittel (26), mit dem das Kunststoffprofil (20) durch die Form (24) führbar ist, wobei die Form (24) und das mindestens eine Haltemittel (26) auf dem Kunststoffprofil (20) periodisch relativ zueinander bewegbar sind, wobei mindestens ein Querschnitt eines Aufnahmeraums (34) des mindestens einen Haltemittels (26) entlang einer Längsachse des Haltemittels (26) zum Ergreifen der Verstärkung (21) und/oder des Kunststoffprofils (20) veränderbar ist **dadurch gekennzeichnet, dass** zum gleichzeitigen, festen Ergreifen sowohl der Verstärkung (21) als auch eines Abschnittes des Kunststoffprofils (20), das aus der Verstärkung (21) gebildet wurde und direkt an die Verstärkung (21) anschließt, durch das mindestens eine Haltemittel (26), Querschnitte des Aufnahmeraums (34) an mehreren Positionen entlang der Längsachse des Haltemittels (26) bereichsweise und der Form (24) des Kunststoffprofils (20) und der Verstärkung (21) entsprechend, veränderbar sind.

10. Vorrichtung nach Anspruch 9, **dadurch gekennzeichnet, dass** das Haltemittel (26) aus mindestens zwei, vorzugsweise vier, relativ zueinander beweglichen, insbesondere senkrecht zur Herstellungsrichtung (25) des Kunststoffprofils (20), Haltemittelteilen (29, 30) aufgebaut ist und jedes Haltemittelteil (29, 30) jeweils mindestens eine Haltemittelbacke (32), vorzugsweise eine Vielzahl von Haltemittelbacken (32), aufweist, wobei die Haltemittelbacken (32) senkrecht zur Herstellungsrichtung (25) des Kunststoffprofils (20) beweglich sind.

11. Vorrichtung nach Anspruch 9 oder 10, **dadurch gekennzeichnet, dass** die Haltemittelbacken (32) einzeln und unabhängig voneinander, insbesondere automatisch, bewegbar sind und wenigstens einige Haltemittelbacken (32) unterschiedlicher Haltemittelteile (29, 30) gegenüberliegend angeordnet sind und komplementär zueinander in Richtung der Längsachse bewegbar sind und zwar vorzugsweise derart, dass mindestens eine Haltemittelbacke (32) über die Längsachse in Richtung des gegenüberliegenden Haltemittelteils (29, 30) hinaus bewegbar ist.

12. Vorrichtung nach einem der Ansprüche 9 bis 11, **dadurch gekennzeichnet, dass** in Herstellungsrichtung (25) des Kunststoffprofils (20) betrachtet vor dem mindestens einem Haltemittel (26) eine Abzieheinrichtung (33), insbesondere eine Abziehwalze oder eine Abziehwinde oder ein weiteres Haltemittel, positioniert ist, mit der die Verstärkung (21) ergreifbar und spannbar ist, wobei die Verstärkung (21) vorzugsweise während des Herstellungsprozesses von der Abzieheinrichtung (33) wenigstens zeitweise wieder freigebbar ist, insbesondere die mechanische Spannung der Verstärkung (21) durch die Abzieheinrichtung (33) variierbar ist.

13. Vorrichtung nach Anspruch 12, **dadurch gekennzeichnet, dass** die Abzieheinrichtung (33) um die Verstärkung (21) drehbar ist, so dass die einzelnen Stränge (23) der Verstärkung (21) miteinander verdrillbar sind oder dass hinter der Abzieheinrichtung (33) eine Verdrilleinheit angeordnet ist, die die einzelnen Stränge (23) der Verstärkung (21) miteinander verdrillt.

14. Vorrichtung nach einem der Ansprüche 12 oder 13, **dadurch gekennzeichnet, dass** die Abzieheinrichtung (33) einen Greifer (35) aufweist, zum Ergreifen des losen Endes der Verstärkung (21) oder des Kunststoffprofils (20) und zum Abziehen der Verstärkung oder des Kunststoffprofils (20) in Herstellungsrichtung (25) bzw. zum Aufbauen einer mechanischen Spannung.

## Claims

1. A method for producing a preferably curved plastic profile (20), wherein a continuous reinforcement (21) made of strands (23), textiles and/or the like is pulled by at least one holding means (26) through a mold (24), for which the reinforcement (21) and/or the plastic profile (20) is grasped at least temporarily by the at least one holding means (26), and the reinforcement (21) is embedded in a matrix in the mold (24) and wherein the mold (24) and the at least one holding means (26) on the plastic profile (20) are moved periodically relative to each other, wherein at least one cross section of a receiving space (34) of the at least one holding means (26) is changed along a longitudinal axis of the holding means (26) in order to grasp the reinforcement (21) and/or the plastic profile (20), **characterized in that**, for the simultaneous firm grasping by the at least one holding means (26) of both the reinforcement (21) and a section of the plastic profile (20) which was formed from the reinforcement (21) and which is directly adjacent to the reinforcement (21), cross sections of the receiving space (34) are changed at several positions along the longitudinal axis of the holding means (26) for sections and corresponding to the shape (24) of the plastic profile (20) and the reinforcement (21).

2. The method as claimed in claim 1, **characterized in that**, for the grasping of the reinforcement (21) and/or the plastic profile (20), cross sections of the receiving space (34) are changed along a longitudinal axis of the at least one holding means (26) at several positions, wherein the reinforcement (21) to be grasped is deflected by the cross section changes of the receiving space (34) from a straight trend preferably to a meandering trend.

3. The method as claimed in one of the claims 1 or 2, **characterized in that**, for the grasping of the plastic profile (20) and/or of the reinforcement (21) by the at least one holding means (26), the cross sections of the receiving space (34) are changed in succession, especially sequentially, along the longitudinal axis of the at least one holding means (26).

4. The method as claimed in one of the preceding claims, **characterized in that** holding jaws (32) of each holding means part (29) of the at least one holding means (29) are moved perpendicular to a longitudinal axis of the reinforcement (21) and/or the plastic profile (20), especially independently of each other.

5. The method as claimed in one of the preceding claims, **characterized in that** the reinforcement (21) is clamped by a stripping device (33), especially a stripping roller or a stripping winch or another holding means (26), situated upstream from the at least one holding means (26) as seen in a production direction (25), between the mold (24) and the stripping device (33), and during the grasping of the reinforcement (21) by the at least one holding means (26) the reinforcement (21) is at least partly released once more from the stripping device (33), preferably the clamping force is decreased.

6. The method as claimed in claim 5, **characterized in that** the reinforcement (21) is clamped by the stripping device (33) while the at least one holding means (26) loses contact with the reinforcement (21) and is moved along the reinforcement (21) in order to grasp the reinforcement (21) once again, or when the reinforcement (21) is pulled through the mold (24) in alternation of several holding means (26), the reinforcement (21) is clamped by the stripping device (33).

7. The method as claimed in claim 5 or 6, **characterized in that** the reinforcement (21) is twisted by rotation of the stripping device (33) about the longitudinal axis of the at least one holding means (26).

8. The method as claimed in one of the preceding claims, **characterized in that** the mold (24) is moved on the plastic profile (20) along its course, in particular the plastic profile (20) is held fast during the movement of the mold (24) and the mold (24) is moved back and forth discontinuously or stepwise, wherein a relative movement of the mold (24) to the plastic profile (20) occurs preferably only during a backward movement of the mold (24) against the production direction (25) and the at least one holding means (26) is brought out of contact with the plastic profile (20) in phases during which the mold (24) is standing still and it is moved relative to the stationary plastic profile (20) in the direction of the likewise stationary mold (24), preferably is moved back against the production direction (25), and optionally after the backward movement of the mold (24) at least one holding means (26), having lost contact with the plastic profile (20), is moved into the vicinity of the front end of the mold (24), preferably relative to the stationary plastic profile (20).

9. A device for producing a preferably curved plastic profile (20) having a mold (24), in which a continuous reinforcement (21) can be embedded in a matrix, and at least one holding means (26), with which the plastic profile (20) can be led through the mold (24), wherein the mold (24) and the at least one holding means (26) on the plastic profile (20) can be moved periodically relative to each other, wherein at least one cross section of a receiving space (34) of the at least one holding means (26) is changeable along a longitudinal axis of the holding means (26) in order to grasp the reinforcement (21) and/or the plastic profile (20), **characterized in that**, for the simultaneous firm grasping of both the reinforcement (21) and a section of the plastic profile (20) which was formed from the reinforcement (21) and which is directly adjacent to the reinforcement (21), cross sections of the receiving space (34) can be changed, by means of the at least one holding means (26), at several positions along the longitudinal axis of the holding means (26) for sections and corresponding to the shape (24) of the plastic profile (20) and the reinforcement (21).

10. The device as claimed in claim 9, **characterized in that** the holding means (26) is composed of at least two, preferably four holding means parts (29, 30) which are movable relative to each other, in particular perpendicular to the production direction (25) of the plastic profile (20), and each holding means part (29, 30) comprises at least one holding means jaw (32), preferably a plurality of holding means jaws (32), wherein the holding means jaws (32) are movable perpendicular to the production direction (25) of the plastic profile (20).

11. The device as claimed in claim 9 or 10, **characterized in that** the holding means jaws (32) are movable individually and independently of each other, especially automatically, and at least some of the holding means jaws (32) of different holding means parts (29, 30) are situated facing each other and are movable complementary to each other in the direction of the longitudinal axis and preferably in such a way that at least one holding means jaw (32) is movable beyond the longitudinal axis in the direction of the opposite holding means part (29, 30).

12. The device as claimed in one of claims 9 to 11, **characterized in that** a stripping device (33), especially a stripping roller or a stripping winch or a further holding means, is positioned upstream from the at least one holding means (26), as seen in the production direction (25) of the plastic profile (20), with which the reinforcement (21) can be grasped and clamped, wherein the reinforcement (21) can be released again at least temporarily by the stripping device (33), preferably during the production process, in particular the mechanical tension of the reinforcement (21) can be varied by the stripping device (33).

13. The device as claimed in claim 12, **characterized in that** the stripping device (33) is rotatable about the reinforcement (21), so that the individual strands (23) of the reinforcement (21) can be twisted together, or **in that** a twisting unit is arranged after the stripping device (33), which twists together the individual strands (23) of the reinforcement (21).

14. The device as claimed in one of claims 12 or 13, **characterized in that** the stripping device (33) comprises a gripper (35), for grasping the loose end of the reinforcement (21) or the plastic profile (20) and for stripping the reinforcement or the plastic profile (20) in the production direction (25) or for building up a mechanical tension.

## Revendications

1. Procédé de fabrication d'un profilé en matière plastique (20), de préférence courbé, un renfort continu (21) en brins (23), tissus et/ou similaires étant tiré à travers un moule (24) par au moins un moyen de retenue (26), le renfort (21) et/ou le profilé en matière plastique (20) étant saisis à cet effet au moins temporairement par l'au moins un moyen de retenue (26), et le renfort (21) étant incorporé dans une matrice dans le moule (24), et le moule (24) et l'au moins un moyen de retenue (26) étant déplacés périodiquement l'un par rapport à l'autre sur le profilé en matière plastique (20),
au moins une section transversale d'un espace de réception (34) de l'au moins un moyen de retenue (26) étant modifiée le long d'un axe longitudinal du moyen de retenue (26) pour la saisie du renfort (21) et/ou du profilé en matière plastique (20), **caractérisé en ce que** pour la saisie ferme simultanément à la fois du renfort (21) et d'une section du profilé en matière plastique (20), qui a été formée à partir du renfort (21) et qui est directement contiguë au renfort (21), par l'au moins un moyen de retenue (26), des sections transversales de l'espace de réception (34) sont modifiées à plusieurs positions le long de l'axe longitudinal du moyen de retenue (26), par zones et en fonction du moule (24) du profilé en matière plastique (20) et du renfort (21).

2. Procédé selon la revendication 1, **caractérisé en ce que,** pour la saisie du renfort (21) et/ou du profilé en matière plastique (20), des sections transversales de l'espace de réception (34) sont modifiées à plusieurs positions le long d'un axe longitudinal de l'au moins un moyen de retenue (26), le renfort (21) à saisir étant dévié d'un tracé rectiligne, de préférence en un tracé en forme de méandre, par les modifications de section transversale de l'espace de réception (34).

3. Procédé selon l'une quelconque des revendications 1 ou 2, **caractérisé en ce que,** pour la saisie du profilé en matière plastique (20) et/ou du renfort (21) par l'au moins un moyen de retenue (26), les sections transversales de l'espace de réception (34) sont modifiées les unes après les autres, notamment de manière séquentielle, le long de l'axe longitudinal de l'au moins un moyen de retenue (26).

4. Procédé selon l'une quelconque des revendications précédentes, **caractérisé en ce que** des mâchoires de retenue (32) de chaque partie de moyen de retenue (29) de l'au moins un moyen de retenue (29) sont déplacées perpendiculairement à un axe longitudinal du renfort (21) et/ou du profilé plastique (20), notamment indépendamment les unes des autres.

5. Procédé selon l'une quelconque des revendications précédentes, **caractérisé en ce que** le renfort (21) est tendu par un appareil d'extraction (33), notamment un rouleau d'extraction ou un treuil d'extraction ou un autre moyen de retenue (26), agencé, tel que vu dans une direction de fabrication (25), avant l'au moins un moyen de retenue (26), entre le moule (24) et l'appareil d'extraction (33), et, pendant la saisie du renfort (21) par l'au moins un moyen de retenue (26), le renfort (21) est à nouveau libéré au moins partiellement par l'appareil d'extraction (33), de préférence la force de tension est réduite.

6. Procédé selon la revendication 5, **caractérisé en ce que** le renfort (21) est tendu par l'appareil d'extraction (33) pendant que l'au moins un moyen de retenue (26) vient hors de contact avec le renfort (21) et est déplacé le long du renfort (21) pour saisir de nouveau le renfort (21) ou, lorsque le renfort (21) est tiré à travers le moule (24) en alternance par plusieurs moyens de retenue (26), le renfort (21) est tendu par l'appareil d'extraction (33).

7. Procédé selon la revendication 5 ou 6, **caractérisé en ce que** le renfort (21) est torsadé par rotation de l'appareil d'extraction (33) autour de l'axe longitudinal de l'au moins un moyen de retenue (26).

8. Procédé selon l'une quelconque des revendications précédentes, **caractérisé en ce que** le moule (24) est déplacé le long du tracé du profilé en matière plastique (20) sur celui-ci, notamment le profilé en matière plastique (20) est maintenu pendant le déplacement du moule (24) et le moule (24) est déplacé en va-et-vient de manière discontinue ou par étapes, un mouvement relatif du moule (24) par rapport au profilé en matière plastique (20) n'ayant de préférence lieu que pendant un mouvement arrière du moule (24) à l'encontre de la direction de fabrication (25), et l'au moins un moyen de retenue (26) étant mis hors de contact avec le profilé en matière plastique (20) pendant des phases pendant lesquelles le moule (24) est immobile et étant déplacé par rapport au profilé en matière plastique immobile (20) dans la direction du moule (24) également immobile, de préférence étant déplacé en retour à l'encontre de la direction de fabrication (25), et, éventuellement, à la suite du mouvement de retour du moule (24), au moins un moyen de retenue (26) qui se trouve hors de contact avec le profilé en matière plastique (20) étant déplacé à proximité de l'extrémité avant du moule (24), de préférence par rapport au profilé en matière plastique (20) alors immobile.

9. Dispositif pour la fabrication d'un profilé en matière plastique (20), de préférence courbé, comprenant un moule (24) dans lequel un renfort continu (21) peut être incorporé dans une matrice, et au moins un moyen de retenue (26) avec lequel le profilé en matière plastique (20) peut être guidé à travers le moule (24), le moule (24) et l'au moins un moyen de retenue (26) pouvant être déplacés périodiquement l'un par rapport à l'autre sur le profilé en matière plastique (20),
au moins une section transversale d'un espace de réception (34) de l'au moins un moyen de retenue (26) pouvant être modifiée le long d'un axe longitudinal du moyen de retenue (26) pour la saisie du renfort (21) et/ou du profilé en matière plastique (20), **caractérisé en ce que**, pour la saisie ferme simultanée à la fois du renfort (21) et d'une section du profilé en matière plastique (20), qui a été formée à partir du renfort (21) et qui est directement contiguë au renfort (21), par l'au moins un moyen de retenue (26), des sections transversales de l'espace de réception (34) peuvent être modifiées à plusieurs positions le long de l'axe longitudinal du moyen de retenue (26), par zones et en fonction du moule (24) du profilé en matière plastique (20) et du renfort (21).

10. Dispositif selon la revendication 9, **caractérisé en ce que** le moyen de retenue (26) est formé d'au moins deux, de préférence quatre, parties de moyen de retenue (29, 30) mobiles les unes par rapport aux autres, notamment perpendiculairement à la direction de fabrication (25) du profilé en matière plastique (20), et chaque partie de moyen de retenue (29, 30) présente respectivement au moins une mâchoire de moyen de retenue (32), de préférence une pluralité de mâchoires de moyen de retenue (32), les mâchoires de moyen de retenue (32) étant mobiles perpendiculairement à la direction de fabrication (25) du profilé en matière plastique (20).

11. Dispositif selon la revendication 9 ou 10, **caractérisé en ce que** les mâchoires de moyen de retenue (32) peuvent être déplacées individuellement et indépendamment les unes des autres, notamment automatiquement, et au moins certaines mâchoires de moyen de retenue (32) de différentes parties de moyen de retenue (29, 30) sont agencées en vis-à-vis et peuvent être déplacées de manière complémentaire les unes par rapport aux autres dans la direction de l'axe longitudinal, et ce de préférence de telle sorte qu'au moins une mâchoire de moyen de retenue (32) peut être déplacée au-delà de l'axe longitudinal dans la direction de la partie de moyen de retenue (29, 30) en vis-à-vis.

12. Dispositif selon l'une quelconque des revendications 9 à 11, **caractérisé en ce que,** tel que vu dans la direction de fabrication (25) du profilé en matière plastique (20), un appareil d'extraction (33), notamment un rouleau d'extraction ou un treuil d'extraction ou un autre moyen de retenue, est positionné avant l'au moins un moyen de retenue (26), avec lequel le renfort (21) peut être saisi et tendu, le renfort (21) pouvant de préférence être à nouveau libéré au moins temporairement par l'appareil d'extraction (33) pendant le processus de fabrication, notamment la tension mécanique du renfort (21) pouvant être variée par l'appareil d'extraction (33).

13. Dispositif selon la revendication 12, **caractérisé en ce que** l'appareil d'extraction (33) peut tourner autour du renfort (21), de telle sorte que les brins individuels (23) du renfort (21) peuvent être torsadés les uns avec les autres, ou **en ce qu'**une unité de torsadage est agencée derrière l'appareil d'extraction (33), laquelle torsade les brins individuels (23) du renfort (21) les uns avec les autres.

14. Dispositif selon l'une quelconque des revendications 12 ou 13, **caractérisé en ce que** l'appareil d'extraction (33) présente un preneur (35) pour la saisie de l'extrémité libre du renfort (21) ou du profilé en matière plastique (20) et pour l'extraction du renfort ou du profilé en matière plastique (20) dans la direction de fabrication (25) ou pour l'établissement d'une tension mécanique.
